# EUROPÄISCHE PATENTSCHRIFT

(11) **EP 3 658 428 B1**
(45) Veröffentlichungstag und Bekanntmachung des Hinweises auf die Patenterteilung: **26.06.2024**
(21) Anmeldenummer: 18737836.9
(22) Anmeldetag: 27.06.2018
(51) Int. Cl.: B60T 8/17, B60T 8/172, B60T 8/1766, B60W 40/09, B60T 8/88, B60T 17/22

(54) **VERFAHREN ZUM UNTERDRÜCKEN VON BREMSGERÄUSCHEN, ZENTRALER SERVER, FAHRZEUGSTEUERUNGSMODUL UND SPEICHERMEDIUM**
METHOD FOR SUPPRESSING BRAKING NOISE, CENTRAL SERVER, VEHICLE CONTROL MODULE, AND STORAGE MEDIUM
PROCÉDÉ DE SUPPRESSION DE BRUITS DE FREINAGE, SERVEUR CENTRAL, MODULE DE COMMANDE DE VÉHICULE ET SUPPORT DE STOCKAGE

(30) Priorität: 28.07.2017 DE 102017213056
(43) Veröffentlichungstag der Anmeldung: 03.06.2020
(73) Patentinhaber: Continental Automotive Technologies GmbH, 30175 Hannover (DE)
(72) Erfinder: GÄDKE, Martin, 65719 Hofheim/Ts. (DE); VOGT, Michael, 55469 Simmern (DE); BACH, Uwe, 65527 Niedernhausen (DE); BECKHAUS, Arne, 64347 Griesheim (DE); HEINZ, Simon, 35510 Butzbach (DE); MENTES, Mustafa, 64546 Mörsfelden-Walldorf (DE); LABUDA, Michael, Clinton Township, Michigan 48038 (US); STONE, Jonathan, Novi, Michigan 48374 (US); GARRO, Ignacio, 60438 Frankfurt am Main (DE); KALYANASUNDARAM, Vigneshwar, 30165 Hannover (DE)
(74) Vertreter: Continental Corporation
(86) Internationale Anmeldenummer: PCT/EP2018/067272
(87) Internationale Veröffentlichungsnummer: WO 2019/020301

(56) Entgegenhaltungen:
- WO-A1-2005/016718
- DE-A1-102014 007 797
- DE-A1-102016 200 759
- US-A1- 2012 053 805

## Beschreibung

Die Erfindung betrifft ein Verfahren zum automatischen Unterdrücken von Bremsgeräuschen bei einer Anzahl von Fahrzeugen mittels eines zentralen Servers, Verfahren zum automatischen Unterdrücken von Bremsgeräuschen in einem Fahrzeug, einen zentralen Server, ein Fahrzeugsteuerungsmodul sowie ein nichtflüchtiges computerlesbares Speichermedium.

Fahrzeuge, insbesondere Kraftfahrzeuge oder schienengebundene Fahrzeuge, weisen in der Regel Bremssysteme auf, welche der Verzögerung des Fahrzeugs dienen. Dabei können in zahlreichen Betriebssituationen Bremsgeräusche auftreten, welche von Fahrzeuginsassen oder auch außenstehenden Personen als unangenehm empfunden werden können. Deshalb wurden bereits Vorgehensweisen entwickelt, mit welchen eine fahrzeugintegrierte Steuerung Bremsgeräusche unterdrücken kann.

Beispielhaft offenbart das Dokument WO 2005/016718 A1 ein Verfahren zur Unterdrückung oder Verhinderung von Geräuschentwicklungen beim Betätigen einer Bremse. Dabei kann beispielsweise die Bremskraftverteilung über die unterschiedlichen Räder des Fahrzeugs variiert werden.

Die Dokumente US 2012 053 805 A1, DE 10 2014 007797 A1 und DE 10 2016 200759 A1 befassen sich ebenfalls mit Geräuscherfassung bzw. Geräuschunterdrückung in einem Kraftfahrzeug.

Nach dem bekannten Stand der Technik ist es typischerweise erforderlich, dass eine im Fahrzeug installierte Software Entscheidungen zur Unterdrückung von Geräuschen trifft, wobei bereits im Vorfeld zu definieren ist, welche Parameter auf ein Geräusch hinweisen. Dies bedeutet, dass die Software eine entsprechende Routine einleitet, wenn bekannte Eingangssignale auf ein Geräuschereignis hindeuten. Hierzu werden typischerweise bei der Entwicklung von Fahrzeugen entsprechende Tests durchgeführt.

Nachteilig an den bekannten Ausführungen ist, dass Geräuschereignisse und Reaktionen bereits im Vorfeld zu definieren sind und nicht mehr flexibel auf im tatsächlichen Fahrzeugbetrieb auftretende Geräuschereignisse reagiert werden kann.

Es ist deshalb eine Aufgabe der Erfindung, Verfahren zum Unterdrücken von Bremsgeräuschen vorzusehen, welche im Vergleich zu Ausführungen gemäß dem Stand der Technik verbessert, beispielsweise flexibler sind. Des Weiteren ist es eine Aufgabe der Erfindung, einen zentralen Server und ein Fahrzeugsteuerungsmodul zum Durchführen eines solchen Verfahrens vorzusehen. Außerdem ist es eine Aufgabe der Erfindung, ein nichtflüchtiges computerlesbares Speichermedium mit Programmcode zum Ausführen eines solchen Verfahrens vorzusehen.

Dies wird erfindungsgemäß durch Verfahren, einen zentralen Server, ein Fahrzeugsteuerungsmodul und ein nichtflüchtiges computerlesbares Speichermedium gemäß den jeweiligen Hauptansprüchen 1, 5, 14, 15 und 16 erreicht. Vorteilhafte Ausgestaltungen können beispielsweise den jeweiligen Unteransprüchen entnommen werden. Der Inhalt der Ansprüche wird durch ausdrückliche Inbezugnahme zum Inhalt der Beschreibung gemacht. Nachdem das Bremsgeräuschverhalten unmittelbar direkt mit dem tribologischen Zustand der kooperierenden Komponenten einer Kraftfahrzeug(scheiben)bremse zusammenhängt, wird hiermit exemplarisch auf die Offenbarung, den Inhalt sowie die Merkmale der folgenden früheren Patentfamilien bzw. Patentanmeldungen der Anmelderin hingewiesen:
EP 1626885 B1; DE 199 47 903 A1. Denn die vorstehenden Patentfamilien haben eine zielführende Bremsenkonditionierung und Bremsenregenerierung zum Gegenstand, wobei insbesondere zumindest implizit ein Onlinedatenaustausch angeregt worden ist.

Die Erfindung betrifft ein Verfahren zum automatischen Unterdrücken von Bremsgeräuschen bei einer Anzahl von Fahrzeugen mittels eines zentralen Servers, wobei das Verfahren folgende Schritte aufweist:
- Empfangen einer Anzahl von Nachrichten von den Fahrzeugen, wobei die Nachrichten Bremszustandsdaten beinhalten, und
- automatische Kommunikation einer Anzahl von Reaktionsanweisungen basierend auf den Bremszustandsdaten mit Zielrichtung Fahrzeug zwecks automatischer Bremsenkonditionierung, wobei jede Reaktionsanweisung eine Maßnahme zum Unterdrücken eines Bremsgeräusches enthält.

Mittels des erfindungsgemäßen Verfahrens kann zumindest ein Teil der Bremsgeräuschunterdrückung auf einen zentralen Server ausgelagert werden, welcher eine flexiblere Reaktion auf Ereignisse bzw. auftretende Geräusche ermöglicht. Insbesondere kann der zentrale Server für eine Mehrzahl von Fahrzeugen bzw. eine Vielzahl von Fahrzeugen beispielsweise eines Herstellers oder einer Fahrzeugflotte zuständig sein. Der zentrale Server ermöglicht es, Fahrzeuge auch während des Betriebs von einer zentralen Stelle aus zu überwachen und Reaktionsanweisungen auch basierend auf Daten festzulegen, welche erst während des Betriebs von Fahrzeugen entstehen.

Bei Bremsgeräuschen handelt es sich typischerweise um Geräusche, welche beim Betätigen von Fahrzeugbremsen auftreten. Es handelt sich dabei typischerweise um solche Geräusche, welche für menschliches Gehör hörbar sind. Die Bremsgeräusche können dabei insbesondere durch übliche Fahrzeugbremssysteme, welche auf Scheibenbremsen oder Trommelbremsen basieren, jedoch auch durch andere oder zusätzliche Fahrzeugbremssysteme wie Retarder-Bremsen, Motorbremsen oder Wirbelstrombremsen erzeugt werden.

Es sei erwähnt, dass die Nachrichten zusätzlich auch Daten eines Freisprechmikrofons, eines sonstigen im Fahrzeug verbauten Mikrofons, eines Crashsensors, eines Airbagsteuergeräts, eines Beschleunigungssensors, eines Regensensors, oder allgemein CAN-Bus-Daten oder auch andere im Fahrzeug vorhandene Daten beinhalten können. Derartige Daten können als Bremszustandsdaten aufgefasst werden, sie können zusätzlich zu den Bremszustandsdaten Bestandteil der Nachrichten sein oder sie können auch anstelle der Bremszustandsdaten in den Nachrichten enthalten sein. Dies kann als eigenständiger Erfindungsaspekt aufgefasst werden.

Die Reaktionsanweisungen dienen dazu, an eines oder mehrere Fahrzeuge übertragen zu werden und dort bei der Unterdrückung von Bremsgeräuschen zu helfen. Die Reaktionsanweisungen können auch allgemeine Maßnahmen zur Verbesserung von Qualität, Komfort und/oder Performance eines Fahrzeugzustands enthalten. Dies kann beispielsweise eine Unterdrückung oder Veränderung eines Bremsgeräusches, beispielsweise durch Veränderung der Bremskraftverteilung zwischen Vorder- und Hinterachse, oder auch eine Erhöhung des Bremsansprechverhaltens durch Erkennung des Bremszustands bei beispielsweise regennasser Fahrbahn sein. Auch andere Maßnahmen zur Verbesserung von Qualität, Komfort oder Performance eines Fahrzeugs können Bestandteil der Reaktionsanweisungen sein. Insbesondere wenn diese unabhängig von Bremsgeräuschen sind, kann dies als eigenständiger Erfindungsaspekt aufgefasst werden.

Die Reaktionsanweisungen können beispielsweise mittels eines Verfahrens des Deep Learning erzeugt werden. Dies hat sich für typische Anwendungsfälle als vorteilhaft erwiesen.

Bevorzugt weist das Verfahren ferner zumindest einen der folgenden Schritte auf:
- Senden der Reaktionsanweisungen an die Fahrzeuge,
- Senden der Reaktionsanweisungen an eine Gruppe von Fahrzeugen,
- Einbringen der Reaktionsanweisungen in neu zu produzierende Fahrzeuge.

Beim Senden der Reaktionsanweisungen an die Fahrzeuge können die Reaktionsanweisungen insbesondere an diejenigen Fahrzeuge gesendet werden, von welchen auch die Nachrichten mit den Bremszustandsdaten empfangen wurden. Es können jedoch die Reaktionsanweisungen auch an eine Gruppe von Fahrzeugen gesendet werden, wobei die Fahrzeuge dieser Gruppe andere sein können oder nur teilweise identisch zu denjenigen sein können, von welchen die Nachrichten mit den Bremszustandsdaten empfangen wurden.

Gemäß einer Weiterbildung wird eine Anzahl von Fahrprofilen basierend auf den Bremszustandsdaten erzeugt, wobei jedes Fahrprofil eine Anzahl von Reaktionsanweisungen zur Bremsgeräuschunterdrückung bei einem jeweiligen Fahrstil enthält. Derartige Fahrprofile können verwendet werden, um Bremsgeräuschunterdrückung in typischen bzw. immer wieder auftretenden Situationen, insbesondere bei bestimmten Verhaltensweisen bzw. Fahrstilen von Fahrern, anwenden zu können.

Bei einem Fahrzeug, insbesondere einem Kraftfahrzeug, welches manuell von einem Fahrer gesteuert wird, kann es sich bei einem Fahrprofil insbesondere um ein Fahrerprofil handeln. Ein Fahrprofil kann jedoch allgemeiner auch auf den Fahrstil eines autonom oder teilautonom fahrenden Fahrzeugs einschließlich eines selbstfahrenden Kraftfahrzeugs, eines schienengebundenen Fahrzeugs oder eines People-Movers bezogen sein.

Es sei verstanden, dass die Erzeugung von Fahrprofilen auch unabhängig von der Erzeugung von Reaktionsanweisungen erfolgen kann und insofern auch als eigenständiger Erfindungsaspekt aufgefasst werden kann.

Bevorzugt weist dabei das Verfahren zumindest einen der folgenden Schritte auf:
- Senden der Fahrprofile an die Fahrzeuge,
- Senden der Fahrprofile an eine Gruppe von Fahrzeugen,
- Einbringen der Fahrprofile in neu zu produzierende Fahrzeuge.

Dadurch können die Fahrprofile in ähnlicher Weise auf Fahrzeuge verteilt werden, wie dies bereits weiter oben mit Bezug auf die Reaktionsanweisungen beschrieben wurde. Auf die obigen Ausführungen sei diesbezüglich verwiesen.

Die Erfindung betrifft des Weiteren ein Verfahren zum automatischen Unterdrücken von Bremsgeräuschen in einem Fahrzeug, wobei das Verfahren folgende Schritte aufweist:
- Aufnehmen einer Anzahl von Bremszustandsdaten,
- Senden der Bremszustandsdaten in einer Anzahl von Nachrichten an einen zentralen Server,
- Empfangen einer Anzahl von Reaktionsanweisungen von dem zentralen Server, wobei jede Reaktionsanweisung eine Maßnahme zum Unterdrücken eines Bremsgeräusches mittels automatischer Bremskonditionierung enthält,
   und
- Anwenden der Reaktionsanweisungen in einer Anzahl von Bremsvorgängen des Fahrzeugs.

Das eben beschriebene Verfahren, welches in einem Fahrzeug ausgeführt wird, korrespondiert zu dem weiter oben beschriebenen Verfahren, welches in einem zentralen Server ausgeführt wird. Das Fahrzeug sendet die Bremszustandsdaten an den zentralen Server und empfängt dementsprechend die Reaktionsanweisungen, welche es zur Unterdrückung von Bremsgeräuschen anwenden kann. Damit ergeben sich die weiter oben beschriebenen Vorteile. Insbesondere kann wesentlich flexibler auf unterschiedliche Situationen oder Fahrstile oder auch Veränderungen durch Verschleiß oder Umbauten reagiert werden.

Das in einem Fahrzeug auszuführende Verfahren kann insbesondere in Verbindung mit einem weiter oben beschriebenen, in einem Server auszuführenden Verfahren angewendet werden. Auf die obigen Ausführungen sei diesbezüglich vollumfänglich verwiesen.

Bevorzugt weist die Erfindung folgende Schritte auf:
- Empfangen einer Anzahl von Fahrprofilen von einem zentralen Server oder Auslesen einer Anzahl von Fahrprofilen aus einem nichtflüchtigen Speicher des Fahrzeugs, wobei jedes Fahrprofil zumindest einen Fahrstil und eine zugehörige Reaktionsanweisung enthält, wobei jede Reaktionsanweisung eine Maßnahme zum Unterdrücken eines Bremsgeräusches enthält,
- Ermitteln eines Fahrstils basierend auf Fahrzustandsdaten,
- Zuordnen des ermittelten Fahrstils zu einem Fahrstil eines der Fahrprofile, dadurch Auswahl dieses Fahrprofils, und
- Anwenden der Reaktionsanweisungen des ausgewählten Fahrprofils in einer Anzahl von Bremsvorgängen des Fahrzeugs.

Dieses Verfahren ermöglicht eine flexible Anpassung der Vorgehensweisen bei der Verhinderung von Bremsgeräuschen oder auch bei allgemeinen Qualitäts-, Komfort- oder Performance-Funktionen auf Fahrstile eines Fahrers. Dadurch können insbesondere die weiter oben bereits beschriebenen Fahrprofile verwendet werden, wobei die entsprechenden Reaktionsanweisungen des Fahrprofils verwendet werden, welches am besten zum Fahrstil passt.

Das Zuordnen des ermittelten Fahrstils zu einem Fahrstil eines der Fahrprofile kann insbesondere bedeuten, dass überprüft wird, welcher der Fahrstile der vorhandenen bzw. bekannten Fahrprofile am meisten Übereinstimmungen und/oder am wenigsten Abweichungen zu dem Fahrstil, welcher basierend auf Fahrzustandsdaten ermittelt wurde, hat. Dadurch kann ein Fahrprofil ausgewählt werden, welches am besten dem Fahrstil des jeweiligen Fahrers entspricht. Dieses Verfahren kann insbesondere auch mit dem weiter oben beschriebenen Verfahren der unmittelbaren Verwendung von Reaktionsanweisungen kombiniert werden. Bezüglich der Fahrprofile sei insbesondere auf die obigen Ausführungen verwiesen.

Bei den Fahrzustandsdaten kann es sich beispielsweise um Daten zu Geschwindigkeit, Beschleunigung, Drehraten, Bremskraft, Verzögerung, Schub oder deren jeweilige erste oder zweite Ableitungen handeln. Damit lassen sich Fahrstile charakterisieren.

Falls sich der ermittelte Fahrstil keinem Fahrstil eines Fahrprofils zuordnen lässt, wird vorzugsweise ein Signal ausgegeben, welches insbesondere eine Serviceintervallverkürzung und/oder eine Verwendung anderer Komponenten anzeigt. Dadurch kann auf diejenigen Fahrer eingegangen werden, welche einen Fahrstil haben, der erheblich von üblichen oder häufig vorkommenden Fahrstilen abweicht.

Das Signal kann beispielsweise als optische oder akustische Meldung an einen Fahrer ausgegeben werden, oder es kann als Nachricht an einen Fahrzeughersteller oder eine Werkstatt gesendet werden, beispielsweise über Mobilfunk oder Fahrzeug-zu-X-Kommunikation, oder es kann in einem Fehlerdatenspeicher abgespeichert werden. Wie erwähnt kann das Signal beispielsweise anzeigen, dass Serviceintervalle verkürzt werden sollen oder andere, beispielsweise robustere Komponenten verwendet werden sollen. Dadurch kann erreicht werden, dass das Fahrzeug besser auf einen unüblichen Fahrstil ausgelegt wird.

Als zentraler Server kann insbesondere ein zentraler Server wie weiter oben beschrieben verwendet werden. Dabei kann auf alle hierin beschriebenen Ausführungen und Varianten zurückgegriffen werden.

Die Erfindung betrifft des Weiteren auch ein Verfahren, welches gleichzeitig in einem zentralen Server und einem Fahrzeug ausgeführt wird. Hierbei kann jeweils auf alle hierin beschriebenen Ausführungen und Varianten bezüglich der in einem Fahrzeug bzw. einem zentralen Server auszuführenden Verfahren zurückgegriffen werden.

Die Nachrichten können insbesondere mittels Mobilfunk empfangen und/oder gesendet werden. Auch andere Übertragungstechniken wie beispielsweise Fahrzeug-zu-X-Kommunikation oder auch die Anbindung an ein WLAN-Netz, insbesondere in einer Garage oder an einem anderen Heimatort des Fahrzeugs, können verwendet werden.

Die Bremszustandsdaten beinhalten bevorzugt Daten bezüglich einem oder mehreren der folgenden Zustände:
- Geräusche,
- Bremsgeräusche,
- Vibrationen,
- Bremskräfte,
- Bremskraftverteilung,
- Raddrehzahlen,
- Pedalweg,
- Pedalkraft,
- Bremsmoment,
- Verzögerung,
- Temperaturen, insbesondere von Bremse, Motor und/oder Umgebung;
und/oder sie beinhalten CAN-Bus-Daten.

Es sei verstanden, dass grundsätzlich alle im Fahrzeug vorhandenen Daten in die Bremszustandsdaten eingefügt werden können, wobei sich die eben genannten Daten als besonders vorteilhaft für die Unterdrückung von Bremsgeräuschen herausgestellt haben.

Bevorzugt enthält eine jeweilige Reaktionsanweisung eine Maßnahme zum Unterdrücken eines Bremsgeräusches in Abhängigkeit von einer Anzahl von Bremszuständen. Dabei können insbesondere die Bremszustandsdaten während des Fahrens bzw. während des Bremsens im Fahrzeug erfasst und verarbeitet werden, und die entsprechende Maßnahme zum Unterdrücken eines Bremsgeräusches kann abhängig davon angewandt werden.

Eine jeweilige Reaktionsanweisung enthält bevorzugt eine oder mehrere der folgenden Maßnahmen wobei die Maßnahmen prinzipiell in beliebiger Art und Weise miteinander verknüpft sein dürfen:
- Bremskraftverteilung,
- Bremskraftverringerung,
- Bremskraftmodulation,
- Bremsenkonditionierung + Bremsenregeneration (sog. "Bremsscheibenputzen")
- Bremsenwartung, Bremseninstandsetzung und/oder Verschleißteilaustausch.

Derartige Gegenmaßnahmen haben sich zur Vermeidung oder Unterdrückung von Bremsgeräuschen in typischen Situationen als vorteilhaft erwiesen. Die Ausführung einer Bremsenkonditionierung bzw. Bremsenregeneration kann beispielsweise eine automatische Kommunikation mit Handlungsanweisung und Zielrichtung an den Fahrzeugführer, und/oder mit Zielrichtung an eine zuständige Kraftfahrzeugwerkstatt und/oder mit Zielrichtung an eine Kraftfahrzeugregelelektronik beinhalten, die Kraftfahrzeugbremsanlage des jeweiligen Kraftfahrzeuges zu warten oder Instandzusetzen. Beispielsweise kann ersatzweise oder zusätzlich dazu automatisch eine Bremsenkonditionierung also Bremsenregeneration nach dem Vorbild des einbezogenen Standes der Technik ausgeführt werden. In diesem Zusammenhang erfolgt beispielhaft eine gezielt gesteuerte oder geregelte Betätigung der mangelhaft erkannten Kraftfahrzeugbremse.

Gemäß einer Weiterbildung weist das Verfahren im Fahrzeug oder im zentralen Server ferner folgenden Schritt auf:
- Ermitteln eines Robustheitsmaßes für eine Komponente mittels der Bremszustandsdaten.

Ein solches Robustheitsmaß kann Aufschluss darüber geben, wie robust eine Komponente, beispielsweise eine Bremsscheibe, eine Bremsbacke, ein Hydraulikzylinder oder ein anderer Teil des Bremssystems, jedoch auch ein beliebiges anderes Teil des Fahrzeugs, auf Bremsvorgänge reagiert und mit welchem Verschleiß zu rechnen ist.

Die Erfindung betrifft des Weiteren einen zentralen Server, welcher dazu konfiguriert ist, ein Verfahren wie weiter oben mit Bezug auf einen zentralen Server beschrieben auszuführen. Die Erfindung betrifft des Weiteren ein Fahrzeugsteuerungsmodul, welches dazu konfiguriert ist, ein Verfahren wie weiter oben mit Bezug auf ein Fahrzeug beschrieben auszuführen. Die Erfindung betrifft auch eine Anordnung mit einem solchen zentralen Server und einem solchen Fahrzeugsteuerungsmodul. Des Weiteren betrifft die Erfindung ein nichtflüchtiges computerlesbares Speichermedium, welches Programmcode enthält, bei dessen Ausführung ein Prozessor ein hierin beschriebenes Verfahren ausführt. Bezüglich der jeweiligen Verfahren kann auf alle hierin beschriebenen Ausführungen und Varianten zurückgegriffen werden.

Allgemein sei erwähnt, dass mittels der hierin beschriebenen Maßnahmen höchst flexibel auf verschiedene Anwendungsfälle reagiert werden kann. Dabei können beispielsweise Daten aufgenommen und ausgewertet werden und es können möglichst in Echtzeitgeschwindigkeit Schlüsse daraus gezogen werden. Die aufzunehmenden Daten können zum Beispiel aus einer laufenden Serienfertigungsüberwachung oder aus einem vom Kunden benutzten Serienfahrzeug stammen. Die Daten können beispielsweise in einem Fall dazu dienen, die Fahrzeugeigenschaften anzupassen. Beispielsweise soll es ermöglicht werden, bei einer Bremsgeräusch-Unterdrückung auch noch im Serienbetrieb zu lernen, wann ein Bremsgeräusch auftritt, um dieses dann mit geeigneten Gegenmaßnahmen zu unterdrücken. In einem anderen Fall können beispielsweise Daten aus einer Fertigung vorliegen. Liegen genug Daten beispielsweise aus unterschiedlichen Bremsendesigns aus einer Serienfertigungsüberwachung und/oder aus Serienfahrzeugen im Feld zugrunde, kann eine Software einen Vorschlag erzeugen, welches Design in zukünftigen Fahrzeugen am robustesten beispielsweise gegen Geräuschevents ist.

Es können insbesondere verschiedene Signale, beispielsweise Sensorsignale und/oder vorhandene Signale wie beispielsweise CAN-Bus-Signale, von einer Software gesammelt und über eine mobile Übertragungseinrichtung, beispielsweise ein LTE-Modul oder ein UMTS-Modul, an einen Empfänger übertragen werden. Dieser Empfänger kann die Daten beispielsweise an einen Speicher oder einen zentralen Server, insbesondere wie weiter oben beschrieben, oder an einen Cloudserver weiterleiten. Diese Daten können zum Beispiel durch einen Maschinenalgorithmus oder eine Deep-Learning-Software in Echtzeit ausgewertet werden. Sollte diese Software feststellen, dass sich zum Bespiel ein Geräuschevent anbahnt, kann sie eine entsprechende Information an das Fahrzeug zurücksenden, welches dann zum Beispiel eine bekannte Strategie anwenden kann, um individuell auf den aktuellen Zustand angepasst zur Geräuschvermeidung beizutragen. Zum anderen kann die im Fahrzeug vorhandene Software mittels der hierin beschriebenen Maßnahmen immer weiter aktualisiert werden und damit kann beispielsweise bei Signalunterbrechung zum zentralen Server auf die im Fahrzeug gespeicherten Daten oder Programme zurückgegriffen werden.

Durch die vorhandenen Daten können beispielsweise realistische Fahrprofile der Nutzer erstellt werden. So ist es beispielsweise möglich, ein Nutzungsprofil zu erstellen, welches die Fahrweise von beispielsweise 99% der Fahrer abdeckt. Ein neu zu entwickelndes Produkt kann dann beispielsweise auf diesen Nutzerkreis ausgelegt werden. Dadurch können unnötig hohe Auslegungskriterien, die ein Produkt unverhältnismäßig verteuern, vermieden werden. Das letzte Prozent der Nutzer kann dann beispielsweise über die Datenanalyse herausgefiltert werden und auf ein kürzeres Serviceintervall oder auf den Tausch zu robusteren Komponenten verwiesen werden.

Ein Anwendungsbeispiel ist auch das Abgleichen unterschiedlicher Datensätze, beispielsweise wie schon beschrieben. So ist es beispielsweise möglich, Datensätze, die eine speziell zugeschnittene Komponente für einen Fahrzeugtyp charakterisieren oder zum Beispiel aus der Fertigung der Komponente gewonnen werden, mit den Nutzerdaten des Fahrzeugs abzugleichen und eine Einschätzung zur Robustheit dieser Kombination zu geben. Wird dies bei einer Vielzahl von Fahrzeugtypen durchgeführt, kann auf Basis dieser Daten ein Vorschlag bei neu auszulegenden Komponenten gemacht werden. Diese können dann beispielsweise besonders robust gegen Verschleiß oder das Auftreten von Geräuschen ausgelegt werden.

Ferner ermöglicht eine mobile Datensammlung auch eine Vielzahl von Anwendungsmöglichkeiten. So ist es beispielsweise möglich, eine Echtzeitauswertung von beispielsweise Fahrzeugdaten in Verbindung mit einer Echtzeitantwort durchzuführen, um Fahrzeugparameter entsprechend anzupassen. Es kann flexibel auf unterschiedliche neue Situationen durch die Deep-Learning-Optimierungsmethode reagiert werden und es können Fahrzeugparameter angepasst werden. Durch Abgleichen unterschiedlicher Datensätze lassen sich neue robustere Produkte entwickeln. Durch gewonnene Nutzerprofile oder Fahrprofile lassen sich kostengünstigere Produkte herstellen.

Die hierin beschriebenen Verfahren und sonstigen Maßnahmen können insbesondere in Kraftfahrzeugen wie Autos, Bussen, oder Lastwagen, jedoch auch allgemein in Fahrzeugen wie People-Movern, Schienenfahrzeugen, Luftfahrzeugen wie Flugzeugen oder Wasserfahrzeugen wie Schiffen verwendet werden.

Daten wie beispielsweise Sensordaten können beispielsweise von einem Fahrzeug über ein Mobilfunknetz übertragen werden. Von dem Mobilfunkempfänger können die Daten weitergeleitet werden an einen zentralen Server. Die Daten können von dem Server beispielsweise über eine Deep-Learning-Software analysiert werden. Ein entsprechender Datensatz kann von der Software über die ganze Kette zurück an das Fahrzeug gesendet werden. Das Fahrzeug kann den Datensatz bevorzugt auswerten und entsprechende Maßnahmen einleiten.

Eine Hardware kann beispielsweise zur Erfassung der Sensor- und CAN-Daten verwendet werden. In einem entsprechenden Modul kann auch eine entsprechende Sendeeinheit zur mobilen Datenübertragung verbaut sein.

Weitere Merkmale und Vorteile der Erfindung wird der Fachmann den nachfolgend mit Bezug auf die beigefügte Zeichnung beschriebenen Ausführungsbeispielen entnehmen.

Dabei zeigen:
- Fig. 1:: ein Fahrzeug und einen zentralen Server,
- Fig. 2:: ein Fahrzeug, einen zentralen Server und ein Mobilfunknetz, und
- Fig. 3:: eine Fahrzeug-Sende- und Empfangseinheit.

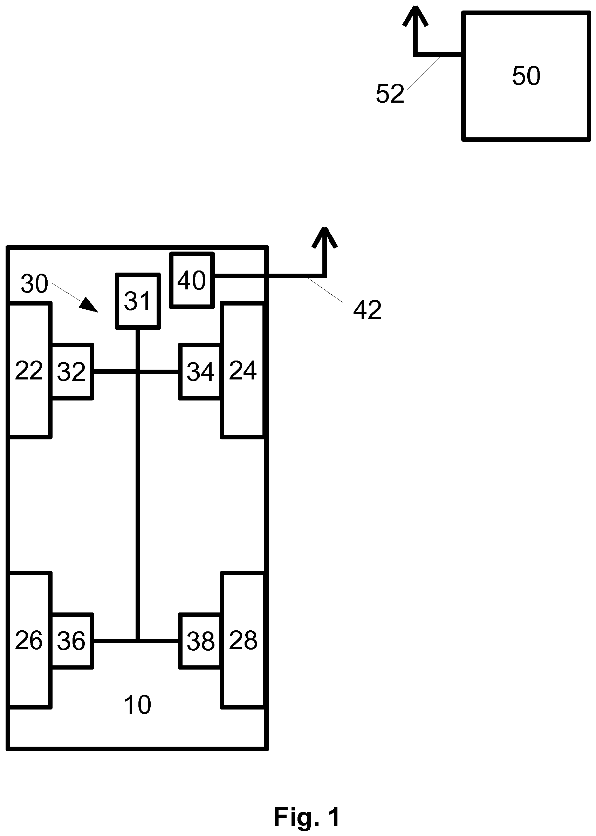

Fig. 1 zeigt schematisch ein Fahrzeug in Form eines Kraftfahrzeugs 10 sowie einen zentralen Server 50. Diese sind jeweils zur Durchführung erfindungsgemäßer Verfahren gemäß jeweiliger Ausführungsbeispiele ausgebildet.

Das Kraftfahrzeug 10 weist ein linkes Vorderrad 22, ein rechtes Vorderrad 24, ein linkes Hinterrad 26 und ein rechtes Hinterrad 28 auf. Das Kraftfahrzeug 10 weist des Weiteren ein Bremssystem 30 auf. Dieses weist eine Zentraleinheit 31 auf, welche zum Erzeugen eines Bremsdrucks ausgebildet ist. Dabei kann es sich beispielsweise um eine Hydraulikpumpe und/oder um einen Bremszylinder mit angeschlossenem Bremspedal handeln. Das Bremssystem 30 weist des Weiteren eine linke vordere Bremseinheit 32, eine rechte vordere Bremseinheit 34, eine linke hintere Bremseinheit 36 und eine rechte hintere Bremseinheit 38 auf. Die Bremseinheiten 32, 34, 36, 38 sind jeweils einem der Räder 22, 24, 26, 28 zugeordnet, um das jeweilige Rad abzubremsen.

Das Kraftfahrzeug 10 weist ferner ein Fahrzeugsteuerungsmodul 40 auf, welches mit einer Fahrzeugantenne 42 verbunden ist. Dies ermöglicht dem Fahrzeugsteuerungsmodul 40 an einer Mobilfunkkommunikation teilzunehmen.

Das Fahrzeugsteuerungsmodul 40 ist dazu ausgebildet, ein erfindungsgemäßes Verfahren gemäß einem Ausführungsbeispiel auszuführen. Hierzu ist das Fahrzeugsteuerungsmodul 40 mit einem nicht dargestellten CAN-Bus des Kraftfahrzeugs 10 verbunden, welcher wiederum mit einer Vielzahl von nicht dargestellten Sensoren verbunden ist. Hierbei handelt es sich insbesondere um Geräuschsensoren sowie um Beschleunigungssensoren, welche in Airbag-Steuerungsmodulen verbaut sind.

Basierend auf den im CAN-Bus verfügbaren Daten erzeugt das Fahrzeugsteuerungsmodul 40 Bremszustandsdaten, wenn das Fahrzeug 10 mittels des Bremssystems 30 gebremst wird. Diese Bremszustandsdaten geben Aufschluss über die Intensität und sonstigen Parameter der Bremsung sowie über eventuell dabei auftretende Geräusche. Die Bremszustandsdaten verpackt das Fahrzeugsteuerungsmodul 40 in Nachrichten und sendet diese über ein nicht dargestelltes Mobilfunknetz an den zentralen Server 50. Dieser ist mit einer stationären Antenne 52 verbunden, welche die Teilnahme an einer Mobilfunkkommunikation ermöglicht. Dies ist insbesondere schematisch zu verstehen. Es sei verstanden, dass der zentrale Server 50 beispielsweise mit dem Internet oder mit einem anderen Netzwerk verbunden sein kann, welches über einen Anschluss an ein Mobilfunknetz, über eine Schnittstelle zur Fahrzeug-zu-X-Kommunikation oder über WLAN einen Datenaustausch mit dem Kraftfahrzeug 10 ermöglicht.

Der zentrale Server 50 ist dazu ausgebildet, ein Verfahren gemäß einem Ausführungsbeispiel der Erfindung auszuführen. Hierzu wertet er die empfangenen Bremszustandsdaten aus und leitet daraus mittels eines Deep-Learning-Algorithmus Reaktionsanweisungen ab. Derartige Reaktionsanweisungen beinhalten jeweils eine Anweisung, wie auf bestimmte Bremszustände des Kraftfahrzeugs 10 reagiert werden soll, um Bremsgeräusche zu unterdrücken. Beispielsweise kann dies beinhalten, den Bremsdruck zu reduzieren oder zu modulieren oder eine bestimmte Verteilung der Bremsdrücke an den Rädern 22, 24, 26, 28 vorzunehmen.

Des Weiteren erzeugt der zentrale Server 50 auch Fahrprofile in Form von Fahrerprofilen, welche auf Daten basieren, welche von mehreren Kraftfahrzeugen gesammelt wurden. Dabei werden typische Fahrstile erkannt, welche häufig von Fahrern verwendet werden, um Kraftfahrzeuge 10 zu steuern. Dadurch kann eine Einteilung von Fahrern in jeweilige Fahrstile vorgenommen werden und es können jeweils Reaktionsanweisungen zugeordnet werden, welche zum jeweiligen Fahrstil passen, d.h. welche eine bestmögliche Unterdrückung von Bremsgeräuschen bei dem jeweiligen Fahrstil ermöglichen.

Die Reaktionsanweisungen sowie die Fahrerprofile werden von dem zentralen Server 50 über eine Mobilfunkkommunikation wieder auf das Kraftfahrzeug 10 übertragen. Dort können sie zur Unterdrückung von Bremsgeräuschen verwendet werden. Beispielsweise kann bei bestimmten Bremszuständen eine hierfür geeignete Reaktionsanweisung, welche vom zentralen Server 50 erzeugt wurde, angewendet werden, um ein Bremsgeräusch zu unterdrücken. Des Weiteren kann ein Fahrstil eines Fahrers basierend auf Fahrdynamikdaten erkannt werden, und es kann ein hierzu korrespondierendes Fahrerprofil ausgewählt werden. Die darin enthaltenen Reaktionsanweisungen können dann vorzugsweise verwendet werden.

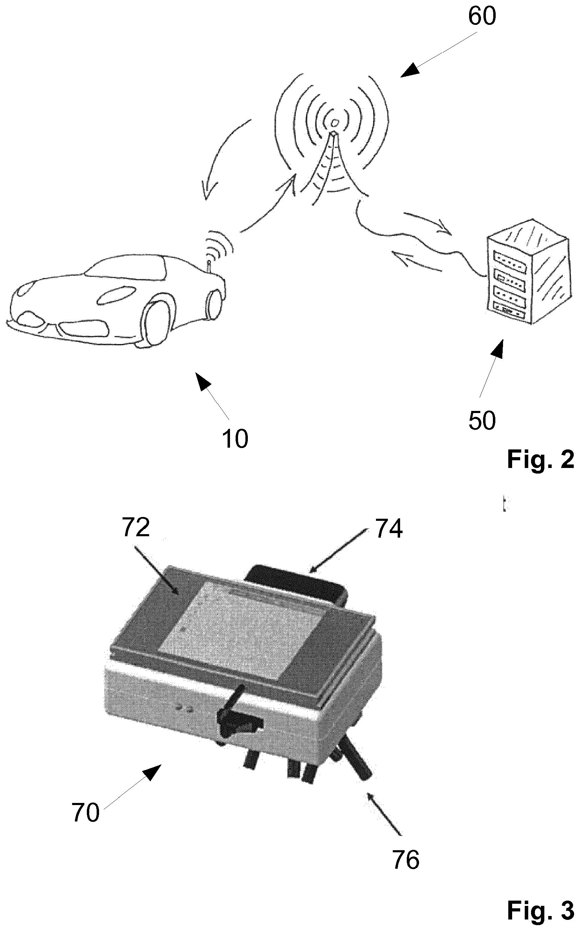

Fig. 2 zeigt rein schematisch eine mögliche Kommunikation zwischen dem Kraftfahrzeug 10 und dem zentralen Server 50. Hierzu dient ein schematisch dargestelltes Mobilfunknetz 60. Sowohl das Kraftfahrzeug 10 wie auch der zentrale Server 50 sind mit dem Mobilfunknetz 60 verbunden, wobei der zentrale Server 50 eine unmittelbare drahtgebundene Netzwerkverbindung hat und das Kraftfahrzeug 10 am Mobilfunk teilnimmt. Dies ermöglicht den bereits mit Bezug auf Fig. 1 beschriebenen Datenaustausch in vorteilhafter Weise.

Fig. 3 zeigt eine Fahrzeug-Sende- und Empfangseinheit 70. Es handelt sich hierbei um eine schematische Darstellung, wobei die Sende- und Empfangseinheit 70 ein Display 72 zum Anzeigen von Informationen, einen Anschluss 74 zum Verbinden mit einem OBD (On-Board-Diagnose)-Port sowie eine Mehrzahl von Kabelabgängen 76 zu weiteren Sensoren aufweist. Eine solche Einheit 70 kann bevorzugt im Rahmen eines erfindungsgemäßen Verfahrens verwendet werden.

## Patentansprüche

1. Verfahren zum automatischen Unterdrücken von Bremsgeräuschen bei einer Anzahl von Fahrzeugen (10) mittels eines zentralen Servers (50),
wobei das Verfahren folgende Schritte aufweist:
- Empfangen einer Anzahl von Nachrichten von den Fahrzeugen (10), wobei die Nachrichten Bremszustandsdaten beinhalten, und
- automatische Kommunikation einer Anzahl von Reaktionsanweisungen basierend auf den Bremszustandsdaten mit Zielrichtung Fahrzeug (10) zwecks automatischer Bremsenkonditionierung, wobei jede Reaktionsanweisung eine Maßnahme zum Unterdrücken eines Bremsgeräuschs enthält.

2. Verfahren nach Anspruch 1, welches ferner zumindest einen der folgenden Schritte aufweist:
- Senden der Reaktionsanweisungen an die Fahrzeuge (10),
- Senden der Reaktionsanweisungen an eine Gruppe von Fahrzeugen (10),
- Einbringen der Reaktionsanweisungen in neu zu produzierende Fahrzeuge (10).

3. Verfahren nach einem der vorhergehenden Ansprüche, welches ferner folgenden Schritt aufweist:
- Erzeugen einer Anzahl von Fahrprofilen basierend auf den Bremszustandsdaten, wobei jedes Fahrprofil eine Anzahl von Reaktionsanweisungen zur Bremsgeräuschunterdrückung bei einem jeweiligen Fahrstil enthält.

4. Verfahren nach Anspruch 3, welches ferner zumindest einen der folgenden Schritte aufweist:
- Senden der Fahrprofile an die Fahrzeuge (10),
- Senden der Fahrprofile an eine Gruppe von Fahrzeugen (10),
- Einbringen der Fahrprofile in neu zu produzierende Fahrzeuge (10).

5. Verfahren zum automatischen Unterdrücken von Bremsgeräuschen in einem Fahrzeug (10), wobei das Verfahren folgende Schritte aufweist:
- Aufnehmen einer Anzahl von Bremszustandsdaten,
- Senden der Bremszustandsdaten in einer Anzahl von Nachrichten an einen zentralen Server (50),
- Empfangen einer Anzahl von Reaktionsanweisungen von dem zentralen Server (50), wobei jede Reaktionsanweisung eine Maßnahme zum Unterdrücken eines Bremsgeräuschs mittels automatischer Bremsenkonditionierung enthält, und
- Anwenden der Reaktionsanweisungen in einer Anzahl von Bremsvorgängen des Fahrzeugs (10).

6. Verfahren zum automatischen Unterdrücken von Bremsgeräuschen in einem Fahrzeug (10) nach Anspruch 5, wobei das Verfahren infolge mindestens eines Geräuschevents folgende Schritte aufweist:
- Empfangen einer Anzahl von Fahrprofilen von einem zentralen Server (50) oder Auslesen einer Anzahl von Fahrprofilen aus einem nichtflüchtigen Speicher des Fahrzeugs (10), wobei jedes Fahrprofil zumindest einen Fahrstil und eine zugehörige Reaktionsanweisung enthält, wobei jede Reaktionsanweisung eine Maßnahme zum Unterdrücken eines Bremsgeräuschs mittels automatischer Bremsenkonditionierung enthält,
- Ermitteln eines Fahrstils basierend auf Fahrzustandsdaten,
- Zuordnen des ermittelten Fahrstils zu einem Fahrstil eines der Fahrprofile, dadurch Auswahl dieses Fahrprofils, und
- Anwenden der Reaktionsanweisungen des ausgewählten Fahrprofils in einer Anzahl von Bremsvorgängen des Fahrzeugs (10).

7. Verfahren nach Anspruch 6,
- wobei falls sich der ermittelte Fahrstil keinem Fahrstil eines Fahrprofils zuordnen lässt, ein Signal ausgegeben wird, welches insbesondere eine Serviceintervallverkürzung und/oder eine Verwendung anderer Komponenten anzeigt.

8. Verfahren nach einem der Ansprüche 5 bis 7,
- wobei als zentraler Server (50) ein zentraler Server (50) verwendet wird, der Datenaustausch mit einem Kraftfahrzeug (10) nach einem der Ansprüche 1 bis 4 ausführt.

9. Verfahren nach einem der vorhergehenden Ansprüche,
- wobei die Nachrichten mittels Mobilfunk empfangen und/oder gesendet werden.

10. Verfahren nach einem der vorhergehenden Ansprüche, wobei die Bremszustandsdaten Daten bezüglich einem oder mehreren der folgenden Zustände beinhalten:
- Geräusche,
- Bremsgeräusche,
- Vibrationen,
- Bremskräfte,
- Bremskraftverteilung,
- Raddrehzahlen,
- Pedalweg,
- Pedalkraft,
- Bremsmoment,
- Verzögerung,
- Temperaturen, insbesondere von Bremse, Motor und/oder Umgebung;
und/oder wobei sie CAN-Bus-Daten beinhalten.

11. Verfahren nach einem der vorhergehenden Ansprüche,
- wobei eine jeweilige Reaktionsanweisung eine Maßnahme zum Unterdrücken eines Bremsgeräuschs in Abhängigkeit von einer Anzahl von Bremszustandsdaten enthält.

12. Verfahren nach einem der vorhergehenden Ansprüche,
wobei eine jeweilige Reaktionsanweisung eine oder mehrere der folgenden Maßnahmen enthält:
- Bremskraftverteilung,
- Bremskraftverringerung,
- Bremskraftmodulation,
- Bremsenkonditionierung und/oder Bremsenregeneration.

13. Verfahren nach einem der vorhergehenden Ansprüche,
welches ferner im Fahrzeug oder im zentralen Server (50) folgenden Schritt aufweist:
- Ermitteln eines Robustheitsmaßes für eine Komponente mittels der Bremszustandsdaten.

14. Zentraler Server (50), welcher dazu konfiguriert ist, ein Verfahren nach einem der Ansprüche 1 bis 4 auszuführen.

15. Fahrzeugsteuerungsmodul (40), welches dazu konfiguriert ist, ein Verfahren nach einem der Ansprüche 5 bis 13 auszuführen.

16. Nichtflüchtiges computerlesbares Speichermedium, welches Programmcode enthält, bei dessen Ausführung ein Prozessor ein Verfahren nach einem der Ansprüche 1 bis 13 ausführt.

## Claims

1. Method for automatically suppressing braking noise in a number of vehicles (10) by means of a central server (50),
wherein the method comprises the following steps:
- receiving a number of messages from the vehicles (10), wherein the messages contain braking state data, and
- automatically communicating a number of response instructions based on the braking state data directed to vehicle (10) for the purpose of automatic brake conditioning, wherein each response instruction contains a measure for suppressing braking noise.

2. Method according to Claim 1, which also comprises at least one of the following steps:
- sending the response instructions to the vehicles (10),
- sending the response instructions to a group of vehicles (10),
- installing the response instructions in new vehicles to be produced (10).

3. Method according to either one of the preceding claims, which also comprises the following step:
- generating a number of driving profiles based on the braking state data, each driving profile containing a number of response instructions for braking noise suppression for a particular driving style.

4. Method according to Claim 3, which also comprises at least one of the following steps:
- sending the driving profiles to the vehicles (10),
- sending the driving profiles to a group of vehicles (10),
- installing the driving profiles in new vehicles to be produced (10).

5. Method for automatically suppressing braking noise in a vehicle (10), wherein the method comprises the following steps:
- recording a number of braking state data,
- sending the braking state data to a central server (50) in a number of messages,
- receiving a number of response instructions from the central server (50), wherein each response instruction includes a measure for suppressing braking noise by means of automatic brake conditioning, and
- applying the response instructions in a number of braking operations of the vehicle (10).

6. Method for automatically suppressing braking noise in a vehicle (10) according to Claim 5, wherein the method, owing to at least one noise event, comprises the following steps:
- receiving a number of driving profiles from a central server (50) or reading out a number of driving profiles from a non-volatile memory of the vehicle (10), each driving profile containing at least one driving style and an associated response instruction, each of which contains a measure for suppressing a braking noise by means of automatic brake conditioning,
- identifying a driving style based on driving state data,
- mapping the identified driving style to a driving style of one of the driving profiles, thereby selecting this driving profile, and
- applying the response instructions of the selected driving profile in a number of braking operations of the vehicle (10).

7. Method according to Claim 6,
- wherein if the identified driving style cannot be mapped to any driving style of a driving profile, a signal is output which indicates, in particular, a service interval reduction and/or a use of other components.

8. Method according to any one of Claims 5 to 7,
- wherein a central server (50) which performs data exchange with a motor vehicle (10) according to any one of Claims 1 to 4 is used as the central server (50).

9. Method according to any one of the preceding claims,
- wherein the messages are received and/or transmitted via mobile radio.

10. Method according to any one of the preceding claims,
wherein the braking state data include data relating to one or more of the following states:
- noise,
- braking noise,
- vibrations,
- braking forces,
- braking force distribution,
- wheel rotation speeds,
- pedal travel,
- pedal force,
- braking torque,
- deceleration,
- temperatures, in particular of brakes, engine and/or environment;
and/or wherein they include CAN bus data.

11. Method according to any one of the preceding claims,
- wherein a respective response instruction contains a measure for suppressing braking noise as a function of a number of braking state data.

12. Method according to any one of the preceding claims,
wherein a respective response instruction contains one or more of the following measures:
- braking force distribution,
- braking force reduction,
- braking force modulation,
- brake conditioning and/or brake regeneration.

13. Method according to any one of the preceding claims, which also comprises the following step in the vehicle or in the central server (50):
- identifying a robustness measure for a component by means of the braking state data.

14. Central server (50) which is configured to execute a method according to any one of Claims 1 to 4.

15. Vehicle control module (40) which is configured to execute a method according to any one of Claims 5 to 13.

16. Non-volatile, computer-readable data storage medium, containing program code which, when carried out, causes a processor to execute a method according to any one of Claims 1 to 13.

## Revendications

1. Procédé de suppression automatique de bruits de freinage sur un certain nombre de véhicules (10) au moyen d'un serveur central (50),
le procédé comprenant les étapes suivantes :
- réception d'une pluralité de messages de la part des véhicules (10), les messages contenant des données d'état de freinage, et
- communication automatique d'un certain nombre d'instructions de réaction sur la base des données d'état de freinage à destination du véhicule (10) à des fins de conditionnement automatique des freins, chaque instruction de réaction contenant une action en vue de supprimer un bruit de freinage.

2. Procédé selon la revendication 1, lequel comprend en outre au moins l'une des étapes suivantes :
- envoi des instructions de réaction aux véhicules (10),
- envoi des instructions de réaction à un groupe de véhicules (10),
- introduction des instructions de réaction dans les nouveaux véhicules (10) à produire.

3. Procédé selon l'une des revendications précédentes, lequel comprend en outre l'étape suivante :
- génération d'un certain nombre de profils de conduite sur la base des données d'état de freinage, chaque profil de conduite contenant un certain nombre d'instructions de réaction pour la suppression du bruit de freinage pour un style de conduite respectif.

4. Procédé selon la revendication 3, lequel comprend en outre au moins l'une des étapes suivantes :
- envoi des profils de conduite aux véhicules (10),
- envoi des profils de conduite à un groupe de véhicules (10),
- introduction des profils de conduite dans les nouveaux véhicules (10) à produire.

5. Procédé de suppression automatique des bruits de freinage dans un véhicule (10), le procédé comprenant les étapes suivantes :
- enregistrement d'un certain nombre de données d'état de freinage,
- envoi des données d'état de freinage dans un certain nombre de messages à un serveur central (50),
- réception d'un certain nombre d'instructions de réaction de la part du serveur central (50), chaque instruction de réaction contenant une action destinée à supprimer un bruit de freinage au moyen d'un conditionnement automatique des freins, et
- application des instructions de réaction dans un certain nombre d'opérations de freinage du véhicule (10).

6. Procédé de suppression automatique des bruits de freinage dans un véhicule (10) selon la revendication 5, le procédé comprenant les étapes suivantes suite à au moins un événement de bruit :
- réception d'un certain nombre de profils de conduite de la part d'un serveur central (50) ou lecture d'un certain nombre de profils de conduite à partir d'une mémoire non volatile du véhicule (10), chaque profil de conduite contenant au moins un style de conduite et une instruction de réaction associée, chaque instruction de réaction contenant une mesure destinée à supprimer un bruit de freinage au moyen d'un conditionnement automatique des freins,
- détermination d'un style de conduite sur la base de données d'état de conduite,
- association du style de conduite déterminé à un style de conduite de l'un des profils de conduite, et de ce fait sélection de ce profil de conduite, et
- application des instructions de réaction du profil de conduite sélectionné dans un certain nombre d'opérations de freinage du véhicule (10).

7. Procédé selon la revendication 6,
- un signal étant émis dans le cas où style de conduite déterminé ne peut être associé à aucun style de conduite d'un profil de conduite, lequel indique notamment un raccourcissement de l'intervalle de service et/ou une utilisation d'autres composants.

8. Procédé selon l'une quelconque des revendications 5 à 7,
- le serveur central (50) utilisé étant un serveur central (50) qui effectue un échange de données avec un véhicule automobile (10) selon l'une des revendications 1 à 4.

9. Procédé selon l'une des revendications précédentes,
- les messages étant reçus et/ou envoyés au moyen de la radiocommunication mobile.

10. Procédé selon l'une des revendications précédentes,
les données d'état de freinage comprenant des données relatives à un ou plusieurs des états suivants :
- bruits,
- bruits de freinage,
- vibrations,
- forces de freinage,
- distribution de la force de freinage,
- vitesses de rotation des roues,
- course de pédale,
- force de pédale,
- moment de freinage,
- ralentissement,
- températures, notamment du frein, du moteur et/ou de l'environnement ;
et/ou comprenant des données de bus CAN.

11. Procédé selon l'une des revendications précédentes,
- une instruction de réaction respective comprenant une mesure visant à supprimer un bruit de freinage en fonction d'un certain nombre de données d'état de freinage.

12. Procédé selon l'une des revendications précédentes,
une instruction de réaction respective contenant une ou plusieurs des mesures suivantes :
- distribution de la force de freinage,
- réduction de la force de freinage,
- modulation de la force de freinage,
- conditionnement de la force de freinage et/ou régénération des freins.

13. Procédé selon l'une des revendications précédentes, lequel comprend en outre, dans le véhicule ou dans le serveur central (50), l'étape suivante :
- détermination d'un indice de robustesse pour un composant au moyen des données d'état de freinage.

14. Serveur central (50), lequel est configuré pour mettre en oeuvre un procédé selon l'une des revendications 1 à 4.

15. Module de commande de véhicule (40), lequel est configuré pour mettre en oeuvre un procédé selon l'une des revendications 5 à 13.

16. Support de stockage non volatile lisible par ordinateur, lequel contient un code de programme lors de l'exécution duquel un processeur met en oeuvre un procédé selon l'une des revendications 1 à 13.
